# EUROPEAN PATENT APPLICATION

(11) **EP 0 930 795 A1**
(43) Date of publication of application: **21.07.1999**
(21) Application number: 98100658.8
(22) Date of filing: 16.01.1998
(51) Int. Cl.: H04Q 7/38, H04Q 7/24

(54) **Method for authentication of a mobile subscriber in a telecommunication network**

(71) Applicant: NOKIA TELECOMMUNICATIONS OY, 02150 Espoo (FI)
(72) Inventor: Purovesi, Päivi, 02130 Espoo (FI); Larikka, Tapani, 00390 Helsinki (FI)
(74) Representative: Cohausz & Florack

(57) **Abstract**

The invention relates to a method for authentication of a mobile subscriber using a Mobile Station in a telecommunication network and means for carrying out the authentication. In order to be able to authenticate mobile subscribers located within a Local Area Network requesting an internal service, e.g. an internal call, prior to the set-up, the method comprises the following steps:
1) in a Local Area Network, connected by an Access Network (AN) to a GSM network, a mobile subscriber located within the Local Area Network requests a service within the Local Area Network;
2) authentication data are exchanged between the Mobile Station (MS) and the Mobile Switching Centre (MSC) via the Access Network (AN);
3) the Access Network (AN) enables the service set-up within the Local Area Network if the mobile subscriber was authenticated by the Mobile Switching Centre (MSC).

## Description

The invention relates to a method for authentication of a mobile subscriber using a Mobile Station for requesting a service in a telecommunication network,
in which prior to the set-up of the service authentication messages are exchanged between the Mobile Station and a Mobile Switching Centre of a GSM or GSM-like network, the Mobile Switching Centre comparing received authentication data with internally generated data and enabling the set-up in case of correspondence.

Authentication of mobile subscribers is known from cellular radio systems like GSM, described e.g. by B. Walke in "Mobilfunknetze und ihre Protokolle, Teil I", ComNets, Aachen, October 1996, pages 217-219. In such systems, it is a concern to prevent the possibility to listen in on the communication of mobile subscribers and to prevent the use of the system by non-subscribers. The desired security is achieved by establishing the identity of a mobile subscriber by authentication. The method of authentication in a GSM system will be briefly explained.

In a GSM-system, to use a Mobile Station a mobile subscriber needs a module that cannot be manipulated. In this module are stored internationally unique identification data (IMSI), a secret authentication key and a secret algorithm. The same communication data are stored for each subscriber in the database means HLR/VLR (home/visitor location registration) of a Mobile Switching Centre.

In order to authenticate a mobile subscriber, the Mobile Switching Centre transmits a random number to the Mobile Station. The Mobile Station calculates an authenticator (SRES) by applying the stored secret algorithm to the stored secret authentication key and the received random number, and afterwards transmits this authenticator back to the Mobile Switching Centre. The Mobile Switching Centre compares the received authenticator with an authenticator that was internally determined by using the authentication key and the algorithm which correspond to the identification data of the mobile subscriber. Depending on the result, the mobile subscriber is either authenticated or all transactions are immediately abandoned.

In addition, all information regarding a subscriber can be transmitted in a protected mode. To this purpose, the Mobile Switching Centre - when it realizes that data that has to be protected is to be transmitted - initializes a coding procedure by transmitting a CIPHERING MODE COMMAND message to the Mobile Station. After that, Mobile Station and Mobile Switching Centre generate a transmission key by applying a second algorithm to authentication key and random number. The transmission key itself is never transmitted. It is stored in the Mobile Station and in the Mobile Switching Centre for a certain time and used for encoding and decoding transmission data.

By applying the above method of authentication, GSM systems are quite secure with regard to unauthorized using of services.

In addition to public communication networks, local area networks providing the possibility of internal communication within a certain environment, especially an office environment, become increasingly important in today's business premises. Communication in office environments is not only carried out between different stationary telephones or different computers and printers etc., it also includes the use of Mobile Stations that can be taken along as needed, but nevertheless be connected internally to the local area network just like the stationary wired devices.

EP 0 766 427 A2 describes an office communication system that offers such services. The proposed system comprises a local area network to which several communication devices are connected. Among these devices can be found a low-power base station equipment to offer a radio interface for terminals operating in a public cellular radio network. The local area network is used for transferring information between the devices of the office communication system. A gateway equipment enables on the other hand the transfer of information between the local area network and a public cellular radio network, making it possible to communicate with external subscribers when using devices that are directly connected only with the local area network. A Mobile Station, e.g., is connected to the public cellular radio network via the low-power base station equipment, the local area network and the gateway equipment.

Security within such a local system is an important aspect, especially with regard to Mobile Stations, since, due to their mobility, they are not easy to supervise. When setting up a requested service internally within a local area network it is difficult to determine the identity of a requesting party and to authenticate it. Thus, unauthorized use of equipment cannot easily be prohibited.

It is an object of this invention to provide such method and means for authentication of mobile subscribers located within a local area network requesting an internal service, e.g. an internal call, prior to the set-up.

Thus, the object of the invention is achieved through a method according to the preamble, which consists basically in three steps:
1) in a Local Area Network, connected by an Access Network to a GSM network, a mobile subscriber located within the Local Area Network requests a service within the Local Area Network;
2) authentication data are exchanged between the Mobile Station and the Mobile Switching Centre via the Access Network;
3) the Access Network enables the service set-up within the Local Area Network if the mobile subscriber was authenticated by the Mobile Switching Centre.

The invention proceeds from the idea that it is possible to make use of the existing authentication method of GSM networks for authentication purposes in local area networks.

A mobile subscriber requesting a service is authenticated by GSM authentication every time a service is initiated, regardless of whether the service is to be connected internally or externally. Only if the authentication procedure shows that the requesting subscriber is entitled to make use of the equipment, the requested service is provided. From the point of view of the Mobile Switching Centre the Access Network is just another base station controller via which "normal" authentication in the GSM system is carried through so that no modification of the method employed by the Mobile switching Centre is necessary. Only the Access Network has to be modified in such a way that it is able to forward messages from the Mobile Switching Centre to the Mobil Station requesting a service and vice versa, even if the requesting Mobile Station is located within the boundaries of the local area network and the requested service is also a local service. Moreover, the Access Network has to be able to proceed after the authentication procedure according to the result of the authentication by the GSM system, i.e. establish the connection in case of an authorized request or terminate all transactions in case of an unauthorized request.

The method according to the invention is able to prevent unauthorized use of equipment in local area networks. In addition, the proposed method is simple and easy to implement.

The applicability of this method has to be seen in local area networks for office solutions based on GSM or GSM-like signaling, e.g. DCS or PCS.

The objective of the invention is moreover met for an integrated office communication system
comprising a local area network for transferring information between devices belonging to said office communication system, an Access Network for transferring information between said local area network and a GSM network, and base station equipment for offering a radio interface for Mobile Stations operating in a GSM network.

According to the invention, the Access Network comprises means for transmitting GSM authentication data between a Mobile Station, located within the area of the office communication system and requesting a service within the area of the office communication system, and a Mobile Switching Centre of the GSM network, for enabling the internal set-up in case of authentication of the calling subscriber by the Mobile Switching Centre.

In order to solve the above mentioned problems, the invention moreover proposes to advantageously employ an Access Network integrated in an office communication system, said office communication system comprising a Local Area Network for transferring information between devices belonging to said office communication system and base station equipment for offering a radio interface for Mobile Stations operating in a GSM network, the Access Network, besides transferring information, including authentication data, between said Local Area Network and a GSM network, being used for transmitting authentication data between the Mobile Station and a Mobile Switching Centre of the GSM network when a mobile subscriber using the Mobile Station requests an internal service and for enabling the set-up of the internal service in case of authentication of the mobile subscriber by the Mobile Switching Centre.

This solution makes available an office communication system and an Access Network permitting to employ the above described method according to the invention and therefore offers the same advantages as the method.

Preferred embodiments of the invention become evident from the dependent claims.

Advantageously, the CM SERVICE ACCEPT message which is usually transmitted by the Mobile Switching Centre of a GSM system to accept a service request is used as a message that the requesting mobile subscriber was successfully authenticated.

In case ciphering is used, though, a received CIPHERING MODE COMMAND message can be considered as message that the requesting mobile subscriber was successfully authenticated. In this case it is not necessary to receive a CM SERVICE ACCEPT message before establishing the requested connection.

If radio cell solutions are utilized for an office system, the proposed method also allows to advantageously use GSM ciphering for internal data transfer.

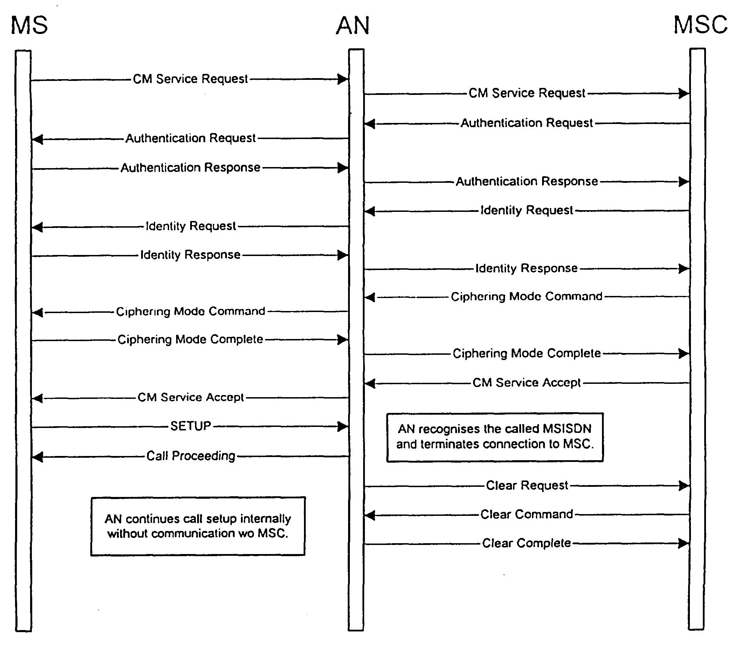

The invention is described in more detail with reference to the accompanying drawing.

The figure illustrates the course of an authentication proceeding for a local area network. The drawing shows three vertical bars. The left one represents a Mobile Station MS, the middle one an Access Network AN and the right one a Mobile Switching Centre MSC.

The Mobile Station MS is located within the boundaries of a local area network and can be, e.g. a mobile phone, requesting a call within a local area network. The Access Network AN consists principally of a gateway computer which is able to transmit data between the local area network and external networks and to carry out all necessary transformations of the data format that is required by the different networks. The Mobile Switching Centre MSC, finally, is a common Mobile Switching Centre MSC of a GSM system, including the data bases HLR/VLR which store subscriber related data. The interface (not shown) between the Accession Network AN and the Mobile Switching Centre MSC is a normal standardized A-interface.

The horizontal lines between the bars represent the transmission of messages in direction of the arrows between Mobile Station MS, Access Network AN and Mobile Switching Centre MSC.

When a mobile subscriber who is within the boundaries of a local area network initiates a call or any other type of service that requires connection to another station within this local area network, his Mobile Station MS transmits a CM SERVICE REQUEST message to the Access Network AN. Before connecting the Mobile Station MS with the desired second station, the Access Network AN initiates an authentication of the requesting mobile subscriber by forwarding the CM SERVICE REQUEST message to a Mobile Switching Centre MSC of the GSM network. The Mobile Switching Centre MSC regards the Access Network AN as a normal base station of the GSM system transmitting a request by a Mobile Station MS. Therefore, the Mobile Switching Centre MSC initiates normal GSM authentication, identity checking and ciphering setting procedures according to security options configured by the GSM network operator. The Mobile Switching Centre MSC transmits an AUTHENTICATION REQUEST message to the Access Network AN in order to obtain an authenticator from the mobile subscriber, by which his identity can be verified. The mobile subscriber receives the AUTHENTICATION REQUEST message forwarded by the Access Network AN and returns an AUTHENTICATION RESPONSE message, comprising an authenticator generated by the Mobile Station MS using its authentication key.

Equally, an IDENTITY REQUEST message is transmitted from the Mobile Switching Centre MSC via the Access Network AN to the Mobile Station MS and an IDENTITY RESPONSE message, comprising the unique identification data of the mobile subscriber, back to the Mobile Switching Centre MSC, again via the Access Network AN. Being in possession of both the AUTHENTICATION RESPONSE message and the IDENTITY RESPONSE message, the Mobile Switching Centre MSC compares the received authenticator and an internally determined authenticator as described above.

In case the two authenticators match, the Mobile Switching Centre MSC transmits a CM SERVICE ACCEPT message to the Access Network AN which forwards the message to the Mobile Station MS. The CM SERVICE ACCEPT message is regarded as enabling signal, indicating that the requesting subscriber was successfully authenticated, and the connection within the local area network can proceed. Alternatively, if ciphering is used, the Mobile Switching Centre MSC transmits a CIPHERING MODE COMMAND message via the Access Network AN to the Mobile Station MS. Since such a message is only transmitted by the Mobile Switching Centre MSC after the received and the internally determined authenticator proved to be equal, the CIPHERING MODE COMMAND message can be used as enabling signal, permitting the connection to be carried out.

After having received an enabling signal, the Mobile Station MS is ready to send a SETUP message to the Access Network AN. If the call can be connected internally, the Access Network AN responds to the Mobile Station MS with a SERVICE PROCEEDING message. After this, the Access Network AN sends a CLEAR REQUEST message to the Mobile Switching Centre MSC of the GSM network. Consequently, the Mobile Switching Centre MSC sends a CLEAR COMMAND message to the Access Network AN which responds with a CLEAR COMPLETE message. The connection to the GSM network and allocated resources at the A-interface are released. The call set-up continues internally by the Access Network AN.

If, on the other hand, the service request was rejected or if some security procedure failed, a CM SERVICE REJECT message is sent from the Mobile Switching Centre MSC via the Access Network AN to the Mobile Station MS and all transactions are terminated. The mobile subscriber will not be connected, even if the connection was to take place within a local area network.

## Claims

1. Method for authentication of a mobile subscriber using a Mobile Station (MS) for requesting a service in a telecommunication network,
in which prior to the set-up of the service authentication messages are exchanged between the Mobile Station (MS) and a Mobile Switching Centre (MSC) of a GSM or GSM-like network, the Mobile Switching Centre (MSC) comparing received authentication data with internally generated data and enabling the set-up in case of correspondence,
**characterized by** the following steps:
1) in a Local Area Network (LAN), connected by an Access Network (AN) to a GSM network, a mobile subscriber located within the Local Area Network requests a service within the Local Area Network;
2) authentication data are exchanged between the Mobile Station (MS) and the Mobile Switching Centre (MSC) via the Access Network (AN);
3) the Access Network (AN) enables the service set-up within the Local Area Network if the mobile subscriber was authenticated by the Mobile Switching Centre (MSC).

2. A method for authentication of a mobile subscriber according to claim 1, comprising the steps of:
- transmitting a CM SERVICE REQUEST message from Mobile Station (MS) to Mobile Switching Centre (MSC) via Access Network (AN), by which a service is requested by the Mobile Station (MS)
- transmitting an AUTHENTICATION REQUEST message from Mobile Switching Centre (MSC) to Mobile Station (MS) via Access Network (AN), by which the Mobile Switching Centre (MSC) requests authentication data of the mobile subscriber
- transmitting an AUTHENTICATION RESPONSE message from Mobile Station (MS) to Mobile Switching Centre (MSC) via Access Network (AN), which comprises secret encoded authentication data (SRES) of the subscriber
- transmitting an IDENTITY REQUEST message from Mobile Switching Centre (MSC) to Mobile Station (MS) via Access Network (AN), by which the Mobile Switching Centre (MSC) requests identification data of the mobile subscriber
- transmitting an IDENTITY RESPONSE message from Mobile Station (MS) to Mobile Switching Centre (MSC) via Access Network (AN), which comprises the identification data (IMSI) of the subscriber
- determining by Mobile Switching Centre (MSC) whether received encoded authentication data corresponds to expected encoded authentication data determined for the requesting mobile subscriber identified by the identification data
- transmitting enabling signal from Mobile Switching Centre (MSC) to Mobile Station (MS) via Access Network (AN) to enable the internal call in case of corresponding of received encoded authentication data and expected encoded authentication data
- Access Network (AN) terminates connection with Mobile Switching Centre (MSC)
- continuing with internal service connection
- transmitting rejection signal from Mobile Switching Centre (MSC) to Mobile Station (MS) via Access Network (AN) in case the received encoded authentication data does not correspond to the expected encoded authentication data
- terminating all transactions

3. Method according to claim 2, **characterized in that** the transmitted enabling signal is a CM SERVICE ACCEPT message transmitted from the Mobile Switching Centre (MSC) to the Access Network (AN).

4. Method according to claim 2, **characterized in that** the transmitted enabling signal is a CIPHERING MODE COMMAND message transmitted from the Mobile Switching Centre (MSC) to the Access Network (AN).

5. Method according to one of the claims 2-4, **characterized in that** the termination of the connection between Access Network (AN) and Mobile Switching Centre (MSC) comprises the steps of
- recognizing by Access Network (AN) that requested service is internal
- transmitting CLEAR REQUEST message from Access Network (AN) to Mobile Switching Centre (MSC)
- transmitting CLEAR COMMAND message from Mobile Switching Centre (MSC) to Access Network (AN)
- transmitting CLEAR COMLETE message from Access Network (AN) to Mobile Switching Centre (MSC)

6. Method according to one of the claims 2-5, **characterized in that** the internal service connection comprises the steps of
- transmitting SETUP-information from Mobile Station (MS) to Access Network (AN)
- transmitting SERVICE PROCEEDING message from Access Network (AN) to Mobile Station (MS)
- continuation of service set-up internally by Access Network (AN)

7. Method according to one of the claims 1-6, **characterized by** the use of GSM ciphering for internal data transfer.

8. Integrated office communication system comprising a local area network for transferring information between devices belonging to said office communication system, an Access Network (AN) for transferring information between said local area network and a GSM network, and base station equipment for offering a radio interface for Mobile Stations (MS) operating in a GSM network, whereby the Access Network (AN) comprises means
- for transmitting GSM authentication data between a Mobile Station (MS), located within the area of the office communication system and requesting a service within the area of the office communication system, and a Mobile Switching Centre (MSC) of the GSM network,
- for enabling the internal set-up in case of authentication of the calling subscriber by the Mobile Switching Centre (MSC).

9. Access Network (AN) integrated in an office communication system, said office communication system comprising a Local Area Network for transferring information between devices belonging to said office communication system and base station equipment for offering a radio interface for Mobile Stations (MS) operating in a GSM network,
the Access Network (AN), besides transferring information, including authentication data, between said Local Area Network and a GSM network,
being used for
- transmitting authentication data between the Mobile Station (MS) and a Mobile Switching Centre (MSC) of the GSM network when a mobile subscriber using the Mobile Station (MS) requests an internal service and for
- enabling the set-up of the internal service in case of authentication of the mobile subscriber by the Mobile Switching Centre (MSC).
